# EUROPEAN PATENT APPLICATION

(11) **EP 1 484 690 A1**
(43) Date of publication of application: **08.12.2004**
(21) Application number: 02712356.1
(22) Date of filing: 14.02.2002
(51) Int. Cl.: G06F 15/00

(54) **AUTHENTICATING METHOD**

(71) Applicant: Wakayama, Hironori, Omiya-shi, Saitama 330-0033 (JP); Tanaka, Yoshiki, Saitama-shi, Saitama 338-0821 (JP); Shimada, Kennichi, Chichibu-shi, Saitama 368-0046 (JP)
(72) Inventor: WAKAYAMA, Hironori, Saitama-shi, Saitama 330-0033 (JP)
(74) Representative: Reichel, Wolfgang, Dipl.-Ing.
(86) International application number: PCT/JP2002/001256
(87) International publication number: WO 2003/069489

(57) **Abstract**

All conceivable problems associated with user authentication can be coped with at least individually by preventing spoofing as the result of leakage of authentication information through interception of communications, monitoring, stealthy glance, brute-force attack, and beyond the control of the user and outside the system, duplication and forgery of authentication information by carrying out an "authentication method that can cope with every possible problem in relation to authentication, excluding monitoring" and an "authentication method authentication having the possibility of spoofing by the authenticating side though there is no danger of monitoring and he possibility of spoofing as the result of theft of authentication information from the authentication device" in two stages in one user authentication processing, and "preventing spoofing by the authenticating side and as the result of theft of authentication information from the authentication device by establishing a collatable and irreversible relationship between the authentication information issued by the user and the authentication information registered in the authentication device" in the latter authentication method,

## Description

### FIELD OF THE INVENTION

This invention relates to a method for authenticating a user who want to gain access from an open communication network using a stationary or portable information terminal equipment to another information terminal system, or a server system whose security is guaranteed by public-key cryptography or any other encryption technology, and an authentication information format and processing method to be used for user authentication.

### BACKGROUND OF THE INVENTION

Two-way authentication using a simple oral password, or user authentication and access control using a password, such as "Open Sesame!", have long been practiced in military and commercial applications. Plain texts have been encrypted or decrypted using a common code book or special characters that can be read or understood only by a limited number of members in a closed system so as to verify that the message in question is intended for that small group of people, that is, to ensure two-way authentication and the confidentiality of information. This encryption technology has been widely proliferated in society with the rapid progress and widespread use of telegraph, telephony and other telecommunications technologies in modern times. More recently, computer science and data communications have brought about mathematical encryption and decryption, enabling automated, high-speed processing, increasing the difficulty of deciphering by unauthorized persons, and thereby ensuring more reliable user authentication. Although these mathematical encryption and decryption technologies have gained popularity in modern society, subsequent waves of technological innovation in terms of both information processing hardware and software have gradually eroded the practical effectiveness of these technologies. And, the dual-key encryption system based on prime factorization and discrete logarithm problems emerged as a seemingly ultimate weapon. This technology designed to make it mathematically difficult to decrypt encryption keys and dualize encryption keys into public and private keys enhanced the confidentiality of communication messages in an open communication network and expanded the application of the technology to user authentication. The massively parallel processing technology using DNA computer or quantum computer that has recently been developed or is currently under development is likely to disable even these advanced mathematical encryption systems. In other words, the advent of the DNA computer technology may compromise the security of public-key encryption, posing the threat of interception in information and telecommunications. That the keys can be easily decrypted in the public-key encryption technology used for authentication poses the problem of the ease of "spoofing," or assuming the identity of another user. Under these circumstances, now under development is an encryption system, called quantum encryption, that is theoretically undecipherable by unauthorized third parties because it is based on "quantum mechanical entanglement." In encryption and two-way authentication based on public-key encryption or any future communication methods based on quantum encryption or quantum teleportation, however, authentication itself is dependent upon terminal equipment or a system on a terminal. As a result, when an authentication system is used in a public environment, such as an enterprise, where terminal equipment can be accessed by an unspecified number of people, or via portable terminal devices that are likely to be burglarized or accidentally lost, it is difficult to rely on the authentication system to determine whether someone on the communication line is, in fact, who it is declared to be since anyone can operate that terminal equipment. That is, the encryption key system alone is no more than mere terminal authentication rather than user authentication.

Various user authentication systems have so far been developed, including user authentication based on a password, IC card or magnetic card, or those biometrics-based identification systems involving fingerprints, retina scan and other biometrics information. A number of techniques for digitizing biometrics information have already been developed since biometrics information that is intrinsic to individual persons is considered suitable for user authentication.

However, biometrics-based user authentication where the same biometrics information has to be shared not only by a user but by the authenticating side still entails the problem of identity theft from the authentication system since it is easy for the authenticating person to use the registered biometrics information, and the abuse of personal information cannot be perfectly prevented so long as the authenticating person might have a malicious intent to impersonate, or emulate the identity of the user. On top of that, there can be the problem of leakage of personal information from the authentication system to the outside because biometrics information is usually stored and handled as electronic data. If the user loses, in an accident, the part of his/her body used for authentication, on the other hand, the uniqueness of biometrics information could work negatively by limiting the possible substitution of other bodily characteristics for that part. This might pose a social problem as the user whose authentication data was stolen could be shut out of society. If biometrics-based authentication is used for a wrong purpose in a crime, a more ghastly crime, such as the amputation of body parts used for authentication, could result.

Another basic problem of biometrics information as used for user authentication lies in that even the technology relying on biometrics information that is intrinsically unique cannot escape from electronic forgery since the technology makes progress on the common foundation of CG, voice synthesis and other information processing technologies. This means that the biometrics information analysis technology equals to authentication technology and to counterfeit technology as well, and that once an authentication technology has been developed it also give rise to a counterfeit technology, representing a cat-and-mouse game. In other words, biometrics information is not self-contained means for user authentication per se, but it is only part of user authentication means at its best.

Now let us take a look at specific techniques for user authentication based on biometrics information. Fingerprint identification, the oldest method of authentication, has some difficulties, including the ease of copying fingerprints with silicone rubber, that is, the problem of leak of authentication information beyond the control of the user and outside the authentication system. It also entails the problem of leak of authentication information beyond the control of the user and outside the system as a user can be easily impersonated based on his/her fingerprint data stolen from an official security organization collecting fingerprints, or through the abuse of fingerprint data by the state authority itself. Furthermore, fingerprint-based identification has the horns of a dilemma between uniqueness and substitutability because user authentication becomes impossible when a finger or fingers used for comparison are lost, or the inner surface of the end joint of a finger is damaged in an accident. Voice-print identification has also the problem of leak of authentication information beyond the control of the user and outside the system since voice prints can be easily copied with a recording machine. It also has the problem of electronic forgery by the use of advance information processing technology. Handwriting-based identification has the problem of instability because handwriting is changeable, depending on the physical or mental condition of a person. Again, it also entails the problem of electronic forgery because handwriting can be stably reproduced using measurement technology, numerical control technology and robotic engineering. User authentication based on the facial configuration of a person has the problem of leak of authentication information beyond the control of the user and outside the system as the image information of the face of the person can be easily generated in the real world, and the problem of electronic forgery by synthesizing or producing an image through the use of CG, etc.

The authentication method using portable devices implanted in a human body or carried on a person, such as an IC card, involves the problem of leak of authentication information within the control of the user and outside the system, and also the risk of accidental loss or being stolen while it offers an advantage of the ease of handling. At the same time, this method has the difficulty of realizing, on the side of the user, the fact that the portable device, such as an IC card, was lost or stolen, resulting in an aggravated damage to the user without noticing the fact of loss or theft. The authentication method based on portable device involves the problem of defective authentication technology due to the characteristics of the technology itself since it is difficult to provide substantiation to prove that an accident or crime was caused by the other party who impersonated the user using the stolen portable device, or by the card owner who staged the accident or crime. The fundamental problem inherent in the authentication method based portable devices is that authentication is carried out by comparing the key information, including a private key in the public-key system, a private key based on DNA information, or a common key and a user ID, stored in the memory part of the portable device with the key information stored on the authentication device. This may offer the risks of impersonation ("spoofing") using the private key, terminal authentication, interception, as in the case of the public-key system, making the system insecure if an authenticating person has a malicious intent.

To correct these problems, there is a method for identifying the owner of a card using a password. In this case, however, the problem inherent in the password-based authentication system may be introduced as it is in the authentication method based on a card or other portable device. The authentication system based on a self-contained IC chip implanted in the body may be exposed to the risk of being involved in a more grisly crime as in the case of biometrics-based authentication, though it eliminates the possibility of being lost.

A password has been widely practiced as an identification code in the form of 4-digit numbers, such as code numbers, or a combination of 6- to 8-digit numbers and alphabetical characters. The password system is the remnant of the age in which the processing capacity of a computer had been relatively low, and its simple sequence of numbers and characters reflected the limited ability to memorize on the side of users. This results in the vulnerability of passwords to brute-force password cracking (brute-force attack). Leakage of information may take place through a stealthy glance at a note pad, that is, leakage within the control of the user and outside the system. Another leakage may occur when critical information, such as a password, are entered on the computer by the user. Furthermore, authentication information may leak as input information is grasped by an unauthorized person who monitors the traffic on the network. Moreover, the fact that the same password is stored on the authenticating side makes the system insecure if the authenticating person has a malicious intent of "spoofing" (impersonating) the user. There is another password-based authentication system, called one-time password, in which a user's password is encoded by a character sequence issued by the server. This system, however, is an authentication system with emphasis placed on the encryption of communications, and has the same problem as with the conventional password-based identification since it relies on traditional passwords for user authentication.

As discussed above, conventional user authentication technologies have a number of shortcomings. First of all, the ease of cracking (deciphering) keys. The successful development of DNA computers capable of massively parallel processing has made it possible to analyze problems of prime factorization and discrete logarithm, thereby enabling impersonation using private keys in the public-key encryption and authentication systems. With password-based authentication, too, a limited number of possible combinations of numbers and characters due to insufficient digit numbers poses the risk of being impersonated since a password can be easily deciphered by brute-force password cracking.

Secondly, the success in deciphering public-key encryption means the revival of interception threats.

Thirdly, authentication systems using terminal equipment or portable/bodily implanted personal devices containing public-key encryption and other key information are nothing more than those for authenticating the terminal equipment loaded with private keys, rather than authenticating the user.

Fourthly, authentication systems based on biometrics information, portable devices or passwords may readily involve impersonation if the authenticating side has a motive to impersonate, or the problem of leak of authentication information from the authentication system. This results from whether there is a collatable and irreversible relationship between the authentication information issued by the user and the authentication information registered on the authentication device.

Fifthly, there is a dilemma between uniqueness and substitutability in authentication systems based on biometrics information.

Sixthly, grisly consequences may be caused when authentication systems based on biometrics information or a bodily implanted personal device are abused for a crime.

Seventhly, there is a threat of electronic forgery in biometrics information.

Eighthly, authentication systems based on biometrics information may involve the threat of leakage of authentication information beyond the control of the user and outside the system.

Ninthly, authentication systems based on portable devices or passwords may involve the threat of leakage of authentication information within the control of the user and outside the system.

Tenthly, password-based authentication has the problem of password theft through stealthy glance at the password or unauthorized monitoring of the traffic on the network.

Among the above-mentioned ten problems associated with the conventional authentication systems, the fifth, sixth, seventh and eighth ones are peculiar to biometrics-based authentication systems. The threat associated with the sixth one, among others, can be reduced by combining with other authentication methods.

It is therefore an object of this invention to provide a password-based authentication method with a sufficient number of combinations that are immune to deciphering even by brute-force password cracking.

Secondly, it is an object of this invention to provide an authentication method that cannot be deciphered even by interception.

Thirdly, it is an object of this invention to provide a method for authenticating a user himself instead of terminal equipment.

Fourthly, it is an object of this invention to provide a method for building a collatable but irreversible relationship between the authentication information issued by a user and the authentication information registered on the authentication device.

Fifthly, it is an object of this invention to provide a method for authenticating a user by combining the biometrics-based authentication or the portable device-based authentication with other authentication methods that can rectify the problems inherent in these methods.

Sixthly, it is an object of this invention to provide an authentication method based on information or information format that can prevent authentication information from being leaked, duplicated or forged beyond the control of the user and outside the system.

Seventhly, it is an object of this invention to provide a password-based authentication method that is complex in construction but easy to be memorized by users; and hard to explain to others, easy to be controlled by the user but hard to leak out.

Eighthly, it is an object of this invention to provide an authentication method that is immune to spoofing even when user authentication information or another piece of information entered by the user to obtain authentication information is leaked through unauthorized monitoring of the traffic on the network.

### DISCLOSURE OF INVENTION

According to a first aspect of this invention, we provide a method for preparing a password statement for password authentication that can have a sufficient number of combinations to defeat a brute-force attack.

According to a second aspect of this invention, we provide a method for changing input information randomly every time authentication is requested and yet making the input information collatable with the information registered in the authentication device so as to prevent authentication information to be reproduced merely by using leaked information in the event of leakage of the authentication information through interception of communications.

According a third aspect of this invention, we provide a method for authenticating a user, instead of terminal equipment, using password-based authentication as described in the first and second aspects of this invention.

According to a fourth aspect of this invention, we provide a method for preventing spoofing by an authenticating person, or spoofing as the result of theft of authentication information from the authentication device by establishing a collatable but irreversible relationship between the user-specific authentication information issued by the user or the authentication information that can be known only to the user and the user's authentication information registered in the authentication device, or a relationship in which it is theoretically or practically difficult to extract the authentication information issued by the user from the authentication information registered in the authentication device.

According to a fifth aspect of this invention, we provide a method for authenticating users based on user-specific information or authentication information that can be known only to the user, so that even when information terminal equipment used by a user for generating authentication information is stolen, spoofing can be made difficult merely by using the stolen terminal equipment.

According to a sixth aspect of this invention, we provide a method in which user authentication is accomplished based only on authentication information that can be known only to the user, and in which information or information format that can prevent authentication information from being leaked, duplicated or forged beyond the control of the user and outside the system is used.

According to a seventh aspect of this invention, we provide a password-based authentication method in which passwords that are complex in construction but easy to be memorized by the users, and yet hard to explain to others, that is, passwords that are easy to be controlled by the user and hard to leak out are prepared by employing a password notation in which values having large bases in the notation method are expressed graphically.

According to an eighth aspect of this invention, we provide a method in which spoofing can be prevented, even when the authentication information entered by the user or the information entered by the user to extract authentication information is leaked through monitoring of the traffic on the network, by using the authentication information registered on the terminal or the authentication information protected by one-time passwords.

As preferred methods for solving the above problems, we adopt the following three methods.
A) As a method for solving the problems described in the first, third, fourth, sixth and eighth aspects of this invention, we adopt solution methods for coping with the leakage of authentication information, spoofing by the authenticating person, leakage through interception of communications by registering the user authentication information, which has been converted in an irreversible fashion using user-specific random numbers or functions, on the authentication device together with the user-specific random numbers and functions, converting the authentication information from the user based upon a request for authentication using the random number and functions, and comparing the converted authentication information with the information registered on the authentication device. When a long-worded password, such as a pass sentence, is used as authentication information, user authentication is accomplished in such a manner that a character string (hereinafter referred to as pass code p1) is extracted from the pass sentence presented by the user based on user-specific random numbers, the extracted character string is stored in the authentication device, together with the user ID; when a request for authentication is issued by the user and the pass sentence is sent together with the user ID, the authentication device invokes the registered pass code p1 based on the user ID, then invokes the corresponding user-specific random numbers, converts the pass sentence sent by the user into a pass code p1 using the user-specific random numbers registered in the authentication device, and compares the converted pass code with the pass code p1 corresponding to the user ID registered in the authentication device. Aside from the pass sentence, information contained in a portable device, or information associated with individual persons, including biometrics information, can be used as the authentication information.
B) As a method for solving the problems described in the first, second, third, fifth, sixth and seventh aspects of this invention, we adopt solution methods in which passwords are made difficult to be cracked even under a brute-force attack by maintaining a large number of combinations even with a small number of digits by increasing the value of base in the notation method in relation to the construction of passwords. With this method, passwords are prepared by using mutually resembling or exactly the same characters, such as graphic forms (hereinafter referred to as F-characters), as the notation method of characters used for passwords so as to prevent passwords from being cracked by a stealthy glance. Furthermore, we adopt an authentication method in which a password is prevented from being cracked by a stealthy glance or interception of communications in such a manner that the authentication device scrambles the arrangement of a password using random numbers and presents the scrambled password to the user, while the user enters a sequence for rearranging the scrambled password into the original arrangement (hereinafter referred to as pass code p2), and the authentication device compares the pass code p2 entered by the user with the pass code p2 generated by the authentication device.
C) We adopt a solution method for solving the problems described in the first, second, third, fourth, fifth, sixth, seventh and eighth aspects of this invention, in which spoofing can be prevented even through unauthorized monitoring of the traffic on the network by using, among the solution methods described in A) above, a solution method where biometrics information is used as authentication information without displaying on the monitor screen, or an authentication method in which the authentication information stored on the terminal equipment is used for authentication without displaying on the monitor screen by using a method in which a pass sentence is registered on the terminal equipment or a public-key and other terminal authentication method; furthermore, a person who enters authentication information is identified as the registered user by using a method, as described in the solution methods described in B) above, in which the authentication information kept in the user's memory is entered by the user every time a request for authentication is issued, or a one-time password method based on the solution methods described in A); namely, both the authentication method using the data stored on the terminal equipment and the authentication method where the authentication information based on the user's memory is entered every time a request for authentication is issued are employed as requirements for user authentication.

As beneficial advantages of this invention compared with the prior art, firstly, the ease of intuitive memory has been realized while maintaining a large number of combinations with a small number of digits by expressing values having large bases as F-characters in the password notation method and allowing a pass code p2 to be selected and prepared from among a limited number of F-characters registered in advance by the user, helping the user's memory by expressing password characters for inputting the pass code p2, the possibility of information leaks by the user himself has been reduced due to the difficulty to express the password characters orally or with sketches to convey to the third party, and yet the ease of inputting has been accomplished by employing input values as a pass code p2.

Secondly, to cope with the increased analyzing performance with the progress of information processing technologies, the solution method described in B) ) easily enhances complexity by increasing the base value in the notation method by increasing the number of F-characters given by the authenticating side at the time of password registration by the user. The method relying on preparation of a pass sentence, among the solution methods described in A), makes it possible to cope with the improved analyzing performance with the progress of information processing technologies by easily enhancing complexity by increasing the length of a pass sentence. The above-mentioned method relying on preparation of a pass sentence can also be used for private keys for terminal authentication or those incorporated in IC cards or other portable devices.

Thirdly, the method relying on preparation of a pass sentence, among the solution methods described in A) above, can be used by directly entering a password that is remembered by the user, user authentication is made possible anywhere in the world using a terminal equipment connected to the network, in conjunction with the solution methods described in B) and C). This permits the user, in an emergency where the terminal equipment is stolen, to take emergency measures, such as alteration of the password by entering a new pass sentence from another terminal equipment connected to the network.

Fourthly, authentication can be accomplished at a high collation processing speed because collation is carried out by using an irreversibly converted character string (hereinafter referred to as a pass code), without directly using long pass sentences or values having large bases, such as F-characters.

Fifthly, pass sentences can be easily prepared by the user because they can be prepared by excerpting from a diary, for example. Moreover, it is difficult for third parties to estimate such pass sentences.

### BRIEF DESCRIPTION OF THE DRAWINGS

FIG. 1 is a flow chart schematically illustrating the overall configuration of a preferred embodiment of the user authentication method according to this invention, in which major component of the system configuration are shown in a composite manner to permit an overall view of the entire system.

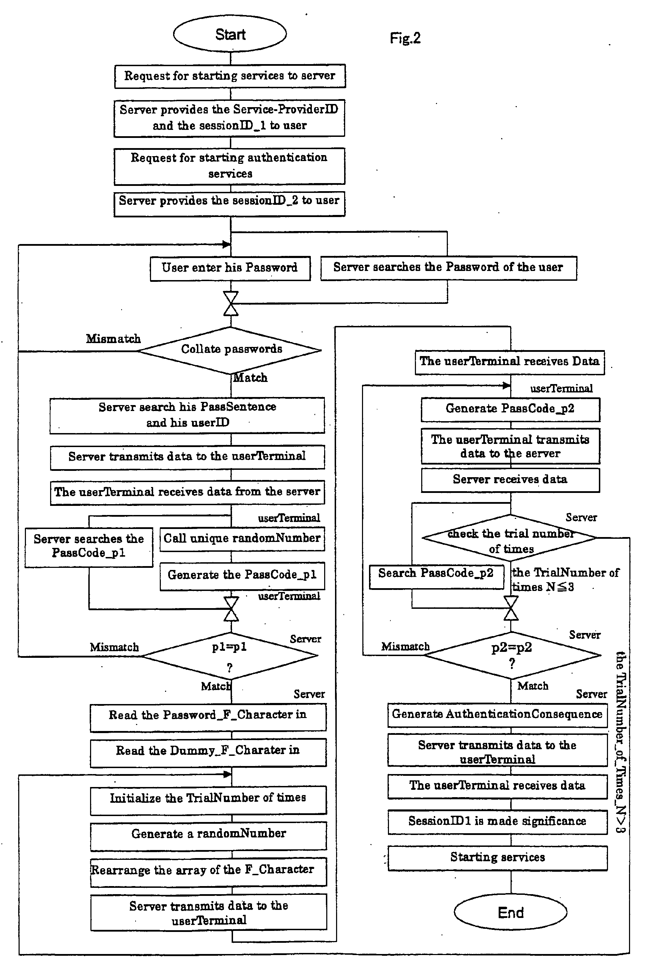

FIG. 2 is a flow chart, excluding encryption processing, illustrating the entire process of user authentication embodying this invention, as shown in FIG. 1.

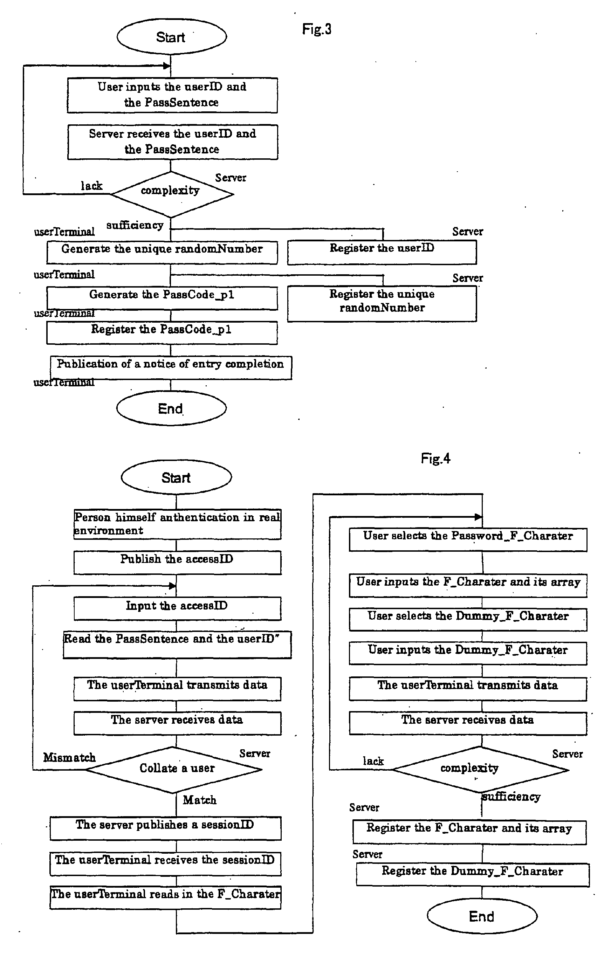

FIG. 3 is a flow chart, excluding encryption processing, illustrating a processing method for registering in the authentication device the authentication information stored in the terminal equipment for pass-code p1 authentication process, of the user authentication processing shown in FIG. 2 as an example of this invention.
FIG. 4 is a flow chart, excluding encryption processing, illustrating a processing method registering in the authentication device the authentication information for pass-code p2 authentication process, of the user authentication processing as shown in FIG. 2 as an example of this invention.

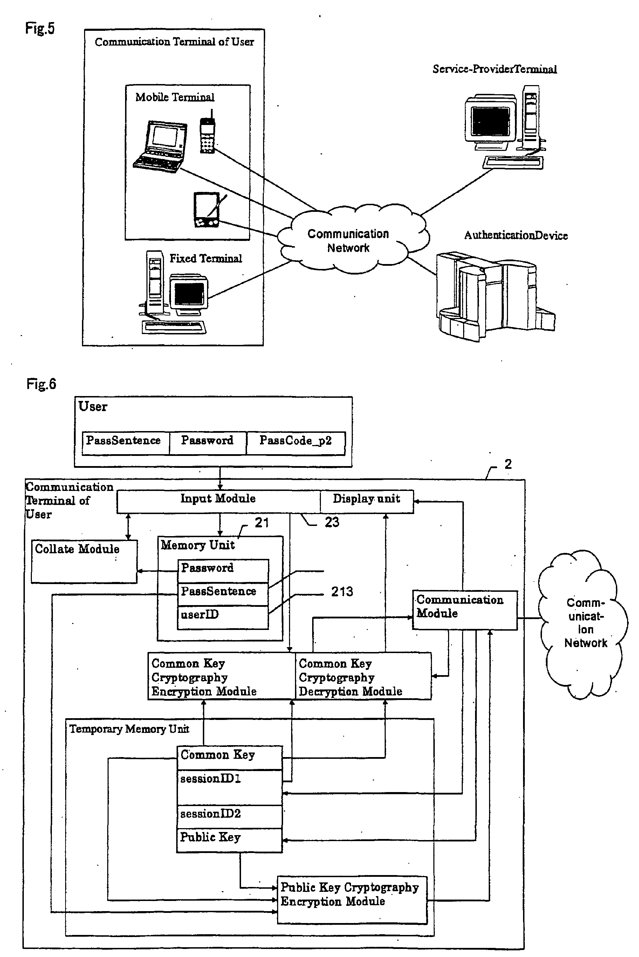

FIG. 5 is an overall schematic diagram of the user authentication processing system shown in FIG. 2 as an example of this invention.
FIG. 6 is a system configuration diagram of user and user-terminal systems, of the system configuration diagram of the user authentication processing system shown in FIG. 5 as an example of this invention.

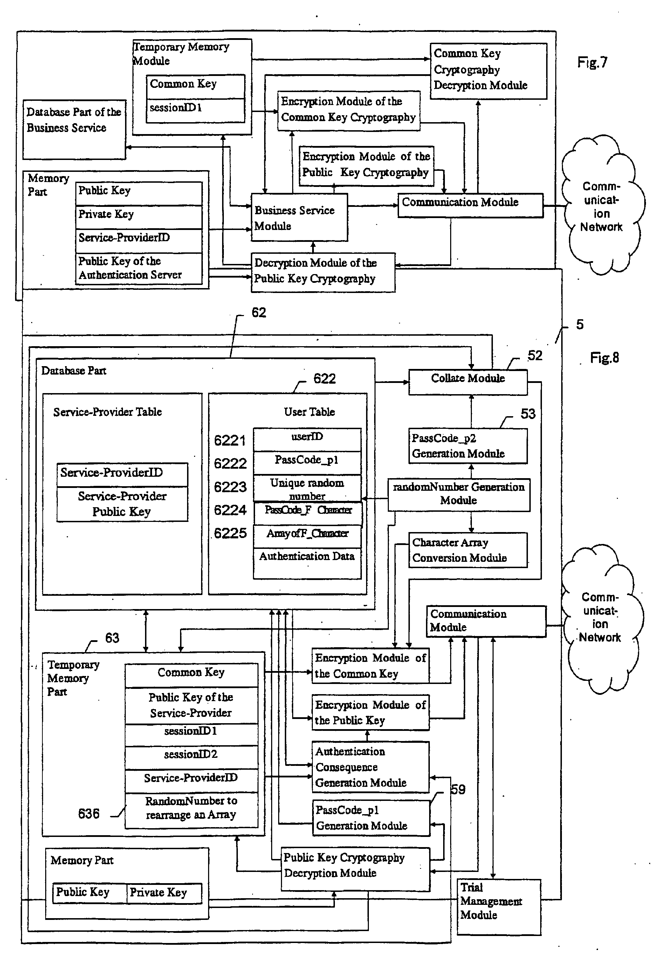

FIG. 7 is a system configuration diagram of a service-provider terminal system, of the system configuration diagram of the user authentication processing system shown in FIG. 5 as an example of this invention.
FIG. 8 is a system configuration diagram of an authentication device, of the system configuration diagram of the user authentication processing system shown in FIG. 5 as an example of this invention.
FIG. 9 is a sequence diagram of a processing method for registering in the authentication device the authentication information stored in the terminal equipment for pass-code p1 authentication process, of the user authentication processing as shown in FIG. 3 as an example of this invention.
FIG. 10 is a sequence diagram concerning the relationship between the user authentication methods shown in FIGS. 2, 3, 4, 5, 6, 7, 8 and 9 as examples of this invention and the user authentication used in the real world.
FIG. 11 is a sequence diagram of a processing method for registering in the authentication device the authentication information for the pass-code p2 authentication process shown in FIG. 4 as an example of this invention.
FIG. 12 is a sequence diagram illustrating the pass-code p1 authentication process, of the user authentication method shown in FIG. 2 as an example of this invention.
FIG. 13 is a sequence diagram illustrating the pass-code p2 authentication process, of the user authentication method shown in FIG. 2 as an example of this invention.

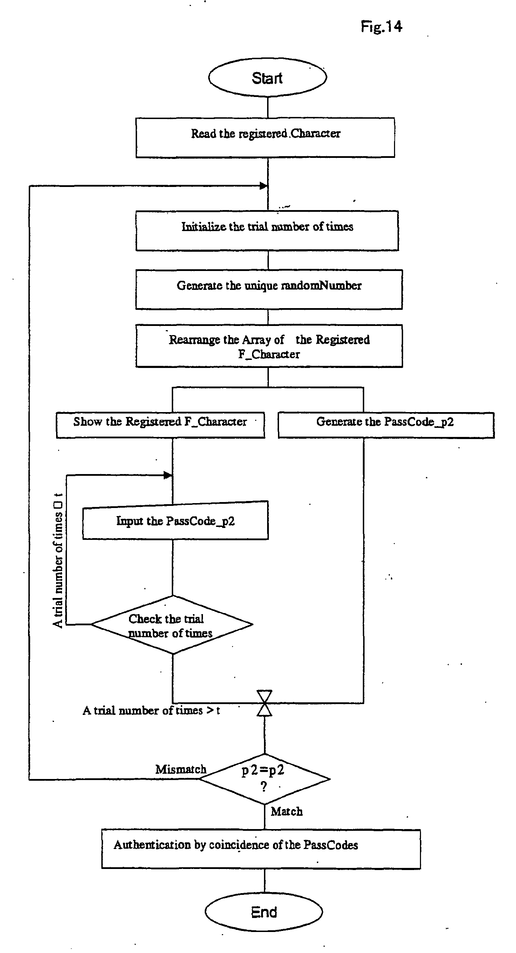

FIG. 14 is a flow chart of a pass-code p2 authentication process shown in FIGS. 1 (c) and (d) as a preferred example of this invention.

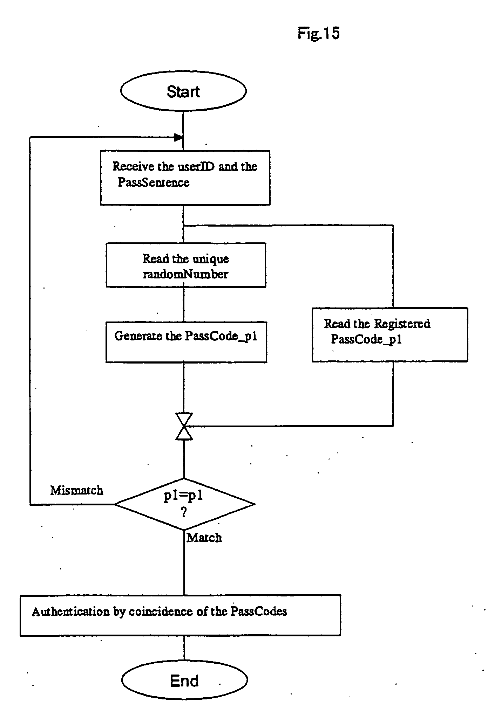

FIG. 15 is a flow chart of the pass-code p1 authentication process shown in FIG. 1 (b) as a preferred example of this invention.

### DESCRIPTION OF NUMERALS AND SYMBOLS

(a) ---- A flow chart schematically illustrating the entire user authentication method according to this invention, with major components of the system configuration shown in a composite manner to permit an overall view of the entire system
(b) ---- A diagram illustrating the operating principle of a method for generating pass code p1 as a preferred example of this invention
(c) ---- A diagram illustrating the operating principle of a preferred notation method for denoting values having large bases in a notation method according to this invention
(d) ---- A diagram illustrating the operating principle of a method for generating pass code p2 from the password characters described in (c)

- 10: A system configuration diagram of a process for authenticating pass code p1
- 11: A system configuration diagram of a process for authenticating pass code p2
- 2: User terminal
- 21: User terminal memory
- 212: Pass sentence registered in user terminal memory
- 213: User ID registered in user terminal memory
- 23: User terminal keyboard
- 5: Authentication device
- 52: Comparison module of authentication device
- 53: Pass-code p2 generation module of authentication device
- 59: Pass-code p1 generation module of authentication device
- 62: Database of authentication device
- 6221: User ID registered in authentication device database
- 6222: Pass code p1 registered in authentication device database
- 6223: Unique, or user-specific, random number registered in authentication device database
- 6224: Password F-character registered in authentication device database
- 6225: Password F-character array
- 63: Temporary memory unit of authentication device
- 636: Random numbers used for rearranging F-character array

### BEST MODE FOR CARRYING OUT THE INVENTION

This invention will be described in more detail in the following, referring to the accompanying drawings.

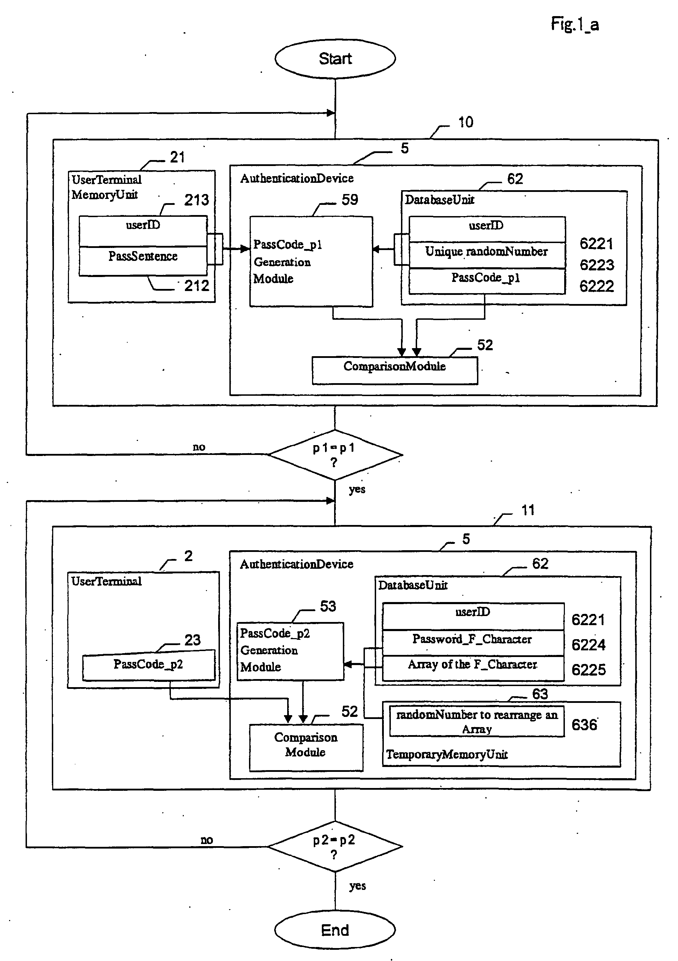

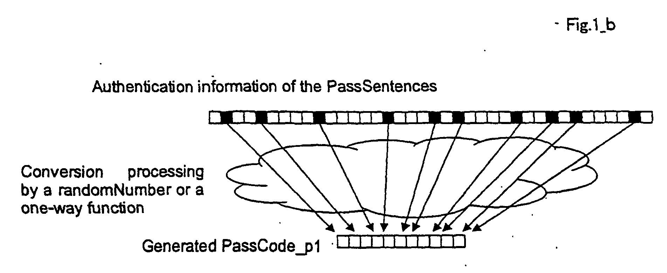

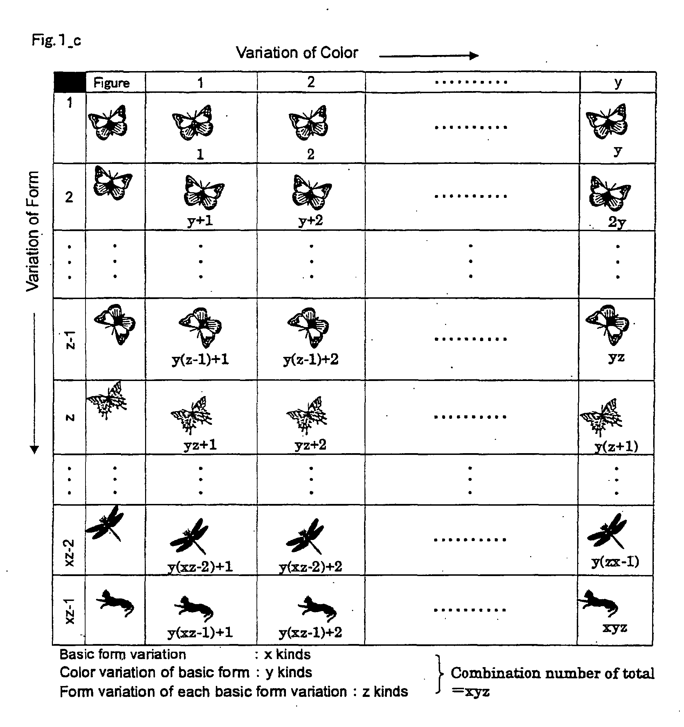

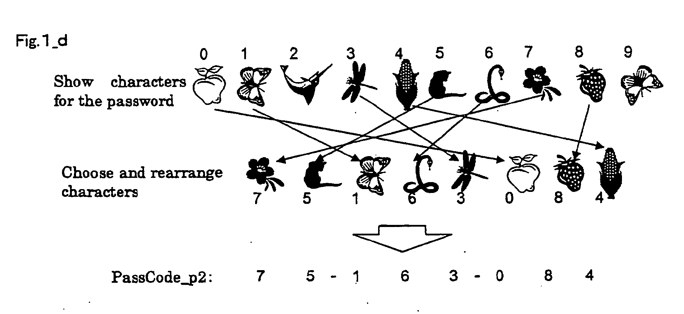

FIG. 1 is a flow chart schematically illustrating the overall configuration of a preferred embodiment of the processing method according to this invention for authentication of a user who want to use electronic information equipment, or user authentication on an information/communications network, in which major component of the system configuration and the operating principle of password-based methods to be used in each processing stage are shown in a composite manner to permit an overall view of the entire system.

FIG. 1 (b) shows a password method used for terminal authentication in which password-based authentication is carried out in a pass-code p1 authentication process in FIG. 1 (a). In the pass-code p1 authentication process (10) in FIG. 1 (a), the user first registers a user-specific pass sentence (212) on the terminal, the authentication device 5 then registers in the authentication device database (62) a pass code p1 extracted from the pass sentence sent by the user in the pass-code p1 generation module (59) using a unique, or user-specific, random number issued by the authentication device for each user. Upon request for authentication by the user, the authentication device authenticates the user terminal by converting the pass sentence (212) sent from the user terminal into a pass code p1 using the unique random number (6223) in the pass-code p1 generation module (59), and comparing in the comparison module (52) the converted pass code p1 with the pass code p1 (6222) that has already been registered in the authentication device. Even when the pass code p1 is stolen from the authentication device, any third party who stole the pass code p1 cannot restore the pass sentence itself and therefore spoof the user since the relationship between the pass sentence and the pass code p1 has been defined in an irreversible manner, and only the pass code p1 has been registered in the authentication device. Furthermore, decryption can be made practically impossible even under brute force attack by providing a sufficient number of digits of the pass sentence. By using the system without displaying on the monitor the data registered on the user terminal, the pass sentence can be prevented from being stolen through unauthorized monitoring of the traffic on the network. The pass sentence can be of a story nature or rhymed because it is a sentence, rather than short syllables or combinations of numbers and characters, like a password. This permits users to memorize more easily than the conventional passwords. Even when a terminal is stolen, the user can access to the authentication device via other terminals to change the registered data to prevent possible damage. This offers more flexibility than the private key in the public-key system and the terminal equipment code used for terminal authentication.

FIG. 1 (d) shows a password-based method used for user authentication in which password-based authentication is carried out in a pass-code p2 authentication process in FIG. 1 (a). First, the user selects a predetermined number of F-characters to be used as a password from among F-characters having large bases in the notation method provided by the authentication device (5), and transmits them to the authentication device (5) in a predetermined array sequence, then the authentication device (5) registers in the database (62) the F-characters and the array sequence thereof as the password F-characters (6224) and the F-character array (6225). Next, as the user issues a request for authentication, the authentication device (5) generates random numbers for array rearrangement for the user, rearrange the array of password F-characters (6224) and transmit it to the user terminal. At the same time, the authentication device registers the random numbers (636) for array rearrangement in the temporary memory unit. The user enters from the input module (23) the previously registered array sequence as pass code p2 and transmits it to the authentication device (5). The authentication device (5) carries out user authentication by extracting the pass word F-characters (6224) and the F-character array (6225) from the user ID (6221) to generate a pass code p2 using the array-rearranging random numbers (636), comparing the generated pass code p2 with the pass code p2 sent by the user in the comparison module (52). Since the F-characters have similar shapes and colors, or exactly the same graphic forms in some cases, any person who presents F-characters (= authenticating person) can easily prepare them, while it is difficult for an identity thief to distinguish which F-characters are used for the password he stole during use. It is also difficult for the user to clearly explain the difference between the F-characters he chose and the other F-characters, while the password F-characters are easy for the user to understand and memorize because they are made of a small number of words. Moreover, the password F-characters are easy to handle since the user can register in advance the only necessary and sufficient number of F-characters for authentication, and thereby prepare a password array from among a small number of options. In addition, the password cannot be reproduced even when the pass code p2 are intercepted because the authentication device transmits the registered F-characters whose array sequence has been rearranged using new random numbers every time the user issues a request for authentication, while the user prepares a rearranging sequence for rearranging the F-character array sequence into the pass code array, and uses this rearranging sequence as the pass code p2 for authentication.

FIG. 1 (a) shows that this invention relates to a user authentication method and device that can cope with the theft of authentication keys from the authentication device, monitoring, stealthy glance, unauthorized monitoring of the traffic on the network, leaks beyond the control of the user and outside the system, electronic forgery, brute-force attack and all other problems associated with the conventional technologies because the pass-code p1 authentication process (10) carries out authenticating processing based on the pass sentence having a large number of digits registered on the terminal as a password, while the pass-code p2 authentication process (11) carries out authenticating process based on the password, which is based on the memory of the user, and has F-characters that can have a large number of digits even with a small number of words by setting the value of base in the notation method to a large value; and that both authentication processes hold simultaneously is set as the prerequisite for authentication. If the terminal equipment is stolen, the password could be decrypted by a third party who stole the terminal equipment via a brute-force attack using that terminal equipment. Even in such a case, however, the damage can be prevented since the user can directly enter a pass sentence from any other terminal equipment to execute both the pass-code p1 process and the pass-code p2 process to change registered data, such as a password.

(b) and (10) can be replaced with other terminal authentication methods, such as an equipment code allocated uniquely to each terminal equipment, or a private key in the public-key system, other unique information registered on the terminal, or key information registered in a portable device. (b) and (d) can be functioned as independent user authentication systems.

(c) schematically shows in a table preferred examples of the configuration and preparation method of F-characters according to this invention. The F-characters comprise basic graphic forms, the color and form variations thereof. The method for preparing the F-characters is as follows: First, a number of basic forms are produced, then color variations are produced by partially or wholly adding color varieties to the basic forms, and a large number of variations are created by giving small changes to the forms or the layouts of the variations. In other cases, new variations can be created merely by setting new different character codes to the same graphical form.

Suppose that there are 100 types of basic-form variations x, 16,777,216 types of color variations y of the basic form, and 20 types of basic-form variations z. Then, their combinations xyz amount to 33,554,432,000 types. When 6-digit passwords are prepared with these F-characters, their combinations amount to 33,554,432,000⁶ ≈ 1.43 x 10⁶³. With the current level of technology, it is practically impossible to decrypt so many passwords by a brute-force attack. Even the future progress of technology can be countered by increasing complexity since the number of color combinations, for example, can be increased to 1.7 x 10 times only by adding one color. As to the authentication processing using the notation method of F-characters, an authentication method using passwords that cannot be decrypted with any other methods than a brute-force attack using stolen terminal equipment or passwords stolen by unauthorized monitoring of the traffic can be created by using the pass code p2 representing the array sequence of a password.

According to this invention, the possibility of a user failing to be authenticated due to forgotten password can be lowered, compared with the conventional password-based authentication methods, because the pass code p2 is prepared by selecting a set of F-characters from the password F-characters registered in advance by the user himself and displayed on the screen, bringing about a situation as if clues for recalling the user's memory are displayed at all times.

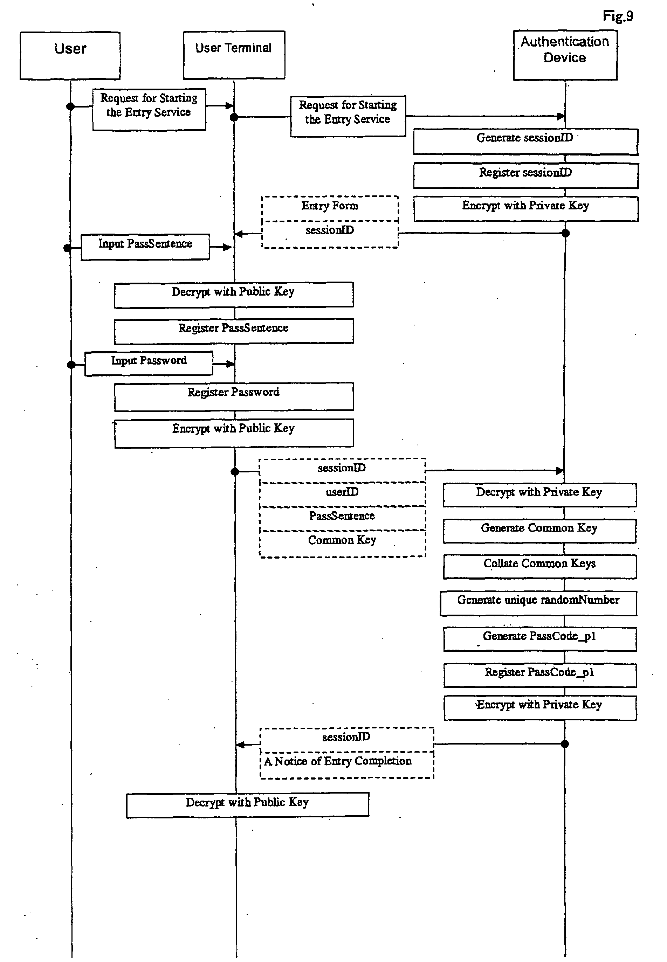

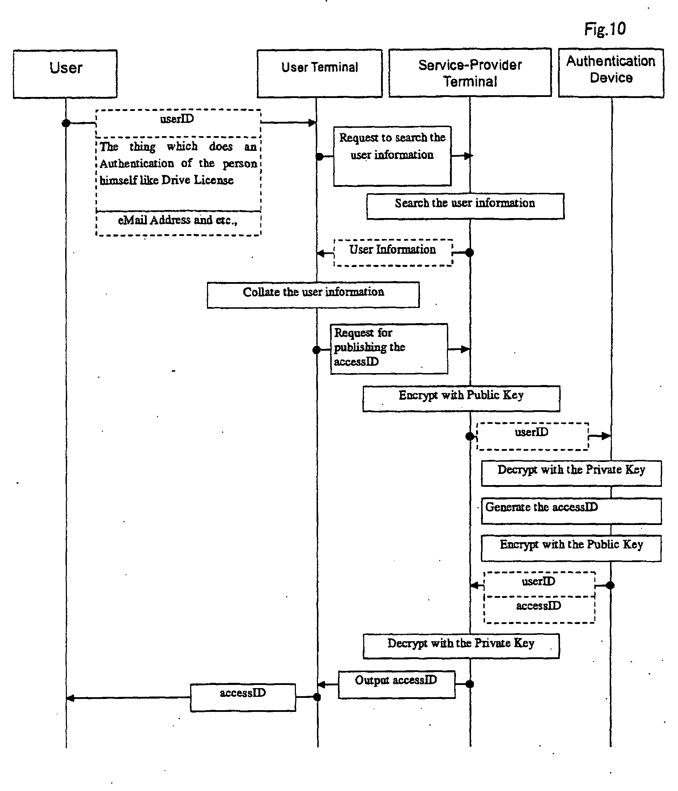

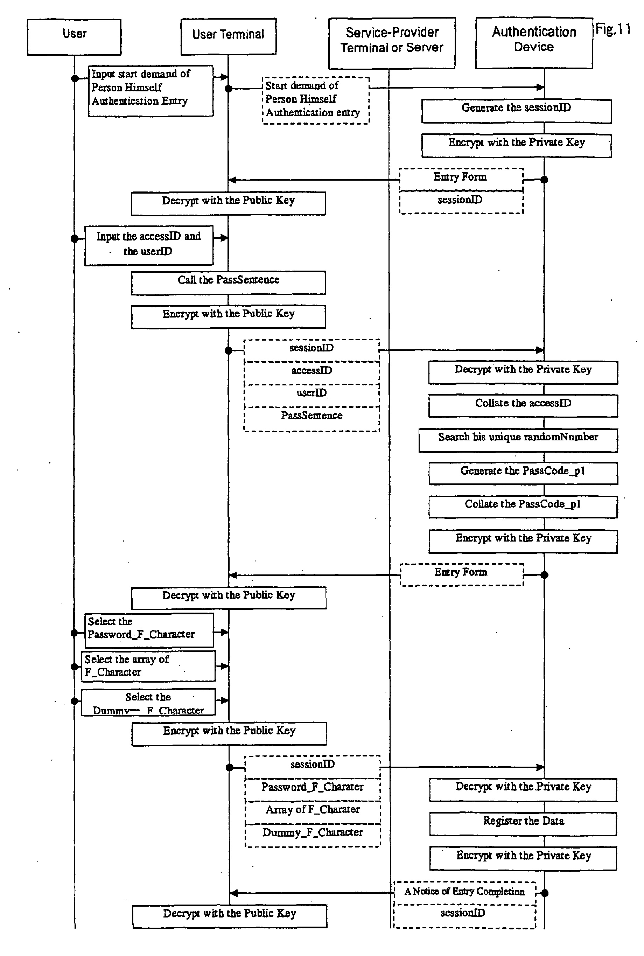

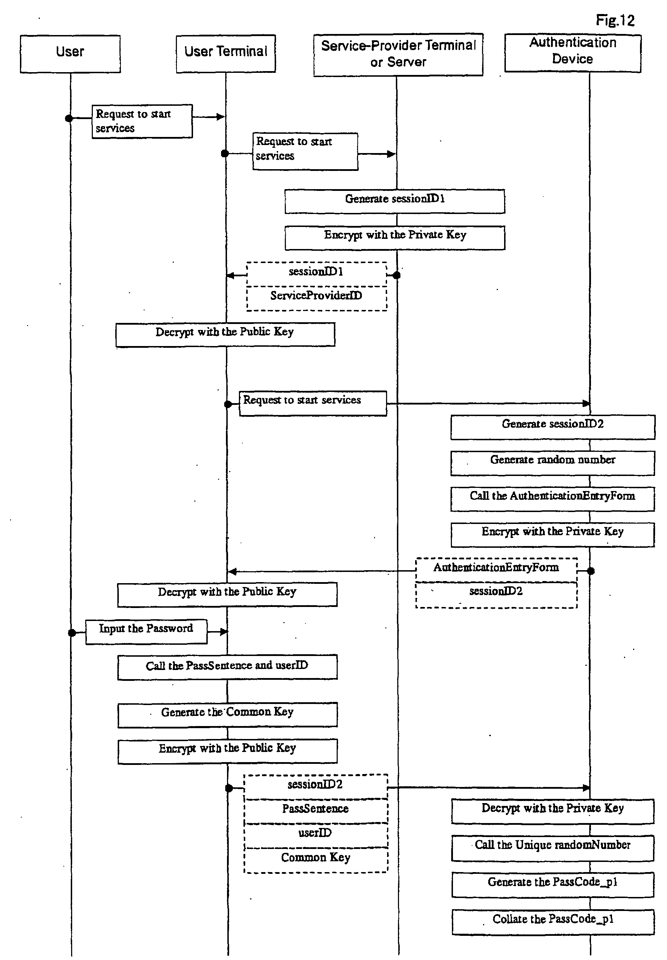

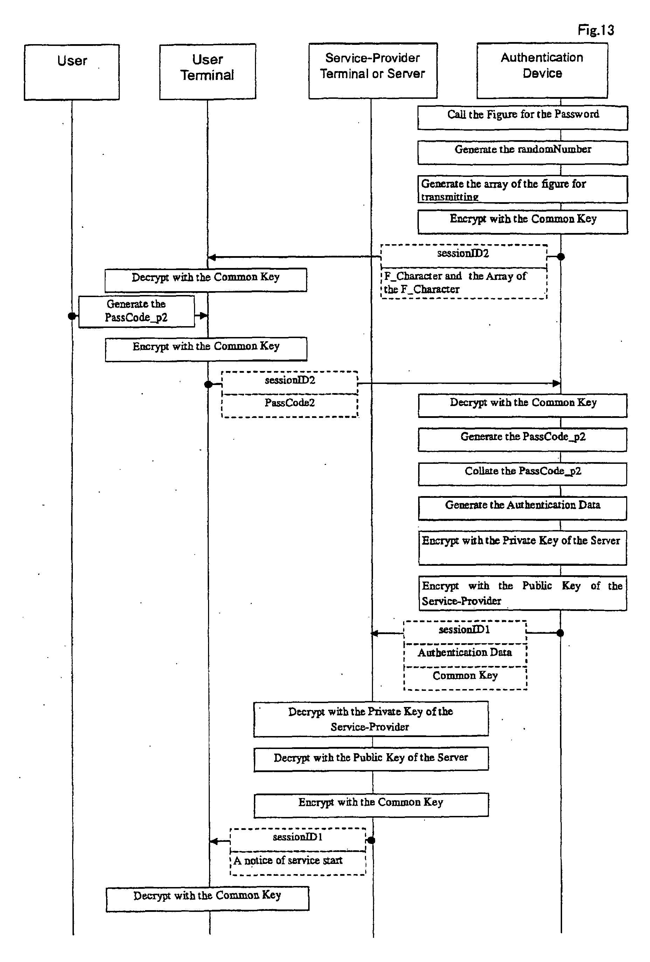

Public and private keys for encryption as shown in sequence diagrams (FIGS. 9, 10, 11, 12 and 13) may be replaced with the pass code p1, the pass code p2, the password for creating the pass code p1, or the password for creating the pass code p2.

### INDUSTRIAL APPLICABILITY

This invention provides a sufficient capability of user authentication to certify that the user is a true holder of an electronic money, e-wallet, or credit card used in e-commerce, or user authentication necessary for issuing various types of certificates in e-government, or user authentication for handling other personal data.

## Claims

1. A user authentication method comprising the steps of carrying out in two stages an authentication method that can cope with all problems relating to authentication except for the monitoring problem and an authentication method having no danger of monitoring, but having the possibility of spoofing on the side of authenticating person and the possibility of spoofing through the theft of authentication information of a user from authentication equipment; both having specific problems in the contents of authentication, thereby preventing spoofing through communication interception, monitoring, surreptitious glance, brute-force attacks, and leakage, duplication or forgery beyond the control of the user and outside the system, and establishing a collatable but irreversible relationship between the authentication information issued by the user and the authentication information registered in the authentication equipment, thereby preventing spoofing on the side of authenticating person and spoofing through the theft of authentication information from the authentication equipment, so that all conceivable specific problems relating to user authentication can be coped with.

2. A notation method of characters to be used for passwords for an authentication method that can cope with all problems relating to authentication, except for monitoring, as set forth in Claim 1 wherein values having large bases in the notation method are expressed by using graphics symbols, etc., thereby allowing passwords having a large number of combinations to be prepared with a smaller number of elements by using said values.

3. A method for using passwords as set forth in Claim 2 wherein upon the user's request for authentication, the authentication equipment shows a new password to the user by rearranging the user's password registered in the authentication equipment with new random numbers, and generates a structure for rearranging the user's password registered in the authentication equipment with the random numbers; the user enters the structure order for rearranging characters for the shown password into the structure of the password registered by the user and notifies the authentication equipment of the structure order, whereas the authentication equipment carries out user authentication by comparing the structure sent by the user with the structure generated by the authentication equipment based on the registered password.

4. A user authentication method involving the establishment of a collatable but irreversible relationship as set forth in Claim 1 wherein the authentication equipment registers data produced by irreversibly converting character-string information, biometries information or key information unique to a user using random numbers or functions unique to the user in the authentication equipment, together with the user ID and the unique random number or functions; when the user issues a request for authentication to the authentication equipment by sending authentication information, such as the character-string information or key information, or entering from the authenticating terminal authentication information, such as biometrics information or key information registered in a portable device, the authentication equipment carries out authentication by generating data produced by irreversibly converting the character-string information, biometrics information or key information sent by a user terminal or an authenticating terminal using the unique random numbers or functions, and comparing the generated data with the corresponding data registered in the authentication equipment.

## Amended claims

### Amended claims under Art. 19.1 PCT

**1.** A user authentication method comprising the steps of authenticating user-ID carrying equipment connected to a communication network, such as communication terminal equipment in which a user ID used for user authentication is registered, or equipment in which a user ID, such as an electronic ID card used by mounting on communication terminal equipment is recorded, by carrying out "authentication having 'the possibility of spoofing by the authenticating side though there is no danger of monitoring,' and 'the possibility of spoofing as the result of theft of authentication information from the authentication device,' and specific problems in the contents of authentication" using a dual-key encryption system, a biometrics-based system, a one-time password system or a pass-sentence system based on a long-worded, sentence-like password in a pass-code p1 authentication process (10), so as to prevent "spoofing as the result of leakage of authentication information through the interception of communications,' 'leakage of authentication information through monitoring of the traffic,' leakage of authentication information through a stealthy glance,' 'leakage of authentication information through a brute-force attack,' leakage of authentication information beyond the control of the user and outside the system,' and 'duplication or forgery of authentication information'" and prevent "spoofing by the authenticating side" and "spoofing as the result of theft of authentication information from the authentication device" by establishing a collatable but irreversible relationship to compare using random numbers the authentication information issued by the user with the authentication information registered in the authentication device, and
authenticating a user by carrying out authentication while securing safety against "spoofing by the authenticating side," "spoofing as the result of theft of authentication information from the authentication device," and "spoofing as the result of 'leakage of authentication information through interception of communications,' leakage of authentication information through a stealthy glance,' 'leakage of authentication information through a brute-force attack,' 'duplication and forgery of authentication information,' and 'theft of user-ID carrying equipment' using the fact that the user can be identified by carrying out authentication using authenticating key information, such as a password having a large number of combinations, with which no spoofing is possible against the user's will in the pass-code p2 authentication process (11),
so that user authentication can be performed at least specifically to prevent "spoofing by the authenticating side," "spoofing as the result of theft of authentication information from the authentication device," "spoofing as the result of 'leakage of authentication information through monitoring,' leakage of authentication information through interception of communications,' leakage of authentication information through a stealthy glance,' 'leakage of authentication information through a brute-force attack,' leakage of authentication information beyond the control of the user and outside the system,' 'duplication or forgery of authentication information,' and 'theft of user-ID carrying equipment' by carrying out "user authentication" and "authentication of user-ID carrying equipment connected to a communication network in two stages.

**2.** A user authentication method as set forth in Claim 1 wherein a password system that has a logically unlimited strength against brute-force attacks and cannot easily be leaked even when an entered password is stolen through a stealthy glance, and is hard to leak even from the owner of the password is employed; the password system comprising a "password having a large number of combinations" is created by expressing values having large bases in the notation method using characters or graphic forms (c) that can be produced infinitely and allocating one unique character code or a plurality of unique character codes to each character for use to denote the password, so that a large number of combinations can be given easily and unlimitedly to a password array having a small number of elements.

**3.** A user authentication method as set forth in Claims 1 and 2 wherein the "password having a large number of combinations" is such that when a request for authentication is issued by the user, the authentication device creates random numbers, rearranges the password registered in the authentication device with the random numbers and presents the rearranged password to the user (d "Presentation of password graphic forms), the authentication device generates an array sequence for rearranging the user's password registered in the authentication device using the random numbers (d "Extraction and rearrangement of password graphic forms), the user informs the authentication device of the array sequence for rearranging the password characters presented by the authentication device into an array of the password the user initially registered (d "Pass code p2), and the authentication device compares the array sequence sent from the user with the array sequence created by the authentication device at the time when the user issued a request for authentication, whereby the illegal use of password through a stealthy glance at input information or interception of communications is practically nullified.

**4.** A user authentication method as set forth in Claim 1 wherein user-ID carrying equipment connected to a communication network, such as communication terminal equipment in which a user ID used for user authentication is registered, or equipment in which a user ID, such as an electronic ID card used by mounting on communication terminal equipment is recorded is authenticated in such a manner that the authentication device converts in an irreversible manner user-specific authentication information, such as character-string information including a pass sentence, or biometrics information or any other key information, or terminal equipment number, into a pass code p1 (b) using user-specific random numbers or one-way functions and registers the generated pass code p1 in the authentication device, together with the user-specific random numbers or one-way functions,
the user issues a request for authentication by transmitting from the user terminal authentication information, such as the character-string information or key information, together with the user ID, or entering from the user terminal and transmitting authentication information, such as biometrics information or key information registered in an IC card or any other portable device, and the authentication device invokes the user-specific random numbers or one-way functions registered in the authentication device,
generates a pass code p1 from authentication information, such as the character-string information sent from the user terminal or the authenticating terminal, biometrics information or any other key encryption information, or terminal equipment number, using the user-specific random numbers or one-way functions, and compares the generated pass code p1 with the pass code p1 registered in the authentication device.

Statement under Art. 19.1 PCT
Claim 1 clarifies the relationship between the contents of the claims and the typical drawings, clarifies "each item of the problems inherent in the conventional authentication methods" and "each item of the problems that can be solved by the present invention" by enumerating and identifying them, and clearly defines the objects of authentication at each stage.

Cited Reference "Full Text and Drawings of WO 97/20265 A1 (CASIO COMPUTER CO., LTD.) 06. 05, 1997" was intended to include graphics symbols and colors in passwords so as to make them user-friendlier, compared with the conventional character-based passwords.

Furthermore, Cited Reference "Probability of Information Security Becoming Increasingly Important". Haruki Tabuchi, Nikkei Computer, 08.09.1993, Vol. 316, pp. 111-121, a special feature entitled "Measures for Preventing Password Interception and Cracking" provides readers with an introductory guide to passwords.

The present invention is designed to carry out authentication in two stages; first of telecommunication terminal equipment and then of the user, supplementing each other by solving problems inherent in one stage with the security measures of the other stage, so that the security and reliability of user authentication can be maintained by solving all the enumerated problems relating to use authentication.

Furthermore, the present invention deems passwords as a measure for authenticating the user, and the conceptual structure, software construction and operating method of passwords are completely different from the cited references, as stated in Claims 2 and 8.

Claim 2 clarifies the relationship between the contents of the claims and the typical drawings, clarifies that an almost infinite number of combinations can be secured for a password by using characters, such as letters or graphics symbols that can be structured infinitely, and clarifies that a large number of combinations can be secured more easily and a theoretically unlimited strength against brute-force attacks and a leakage resistance can be maintained by giving a plurality of character codes to each character.

Claim 3 clarifies the relationship between the contents of the claims and the typical drawings, clarifies the contents of Claim 1 corresponding to this claim, and clarifies that the present invention can achieve the effect of almost nullifying the illegal use of passwords through stealthy glance of input and communication interception.

Claim 4 clarifies the relationship between the contents of the claims and the typical drawings, and clearly defines the objects of authentication.
